# EUROPEAN PATENT SPECIFICATION

(11) **EP 1 564 628 B1**
(45) Date of publication and mention of the grant of the patent: **22.07.2009**
(21) Application number: 04003018.1
(22) Date of filing: 11.02.2004
(51) Int. Cl.: G06F 1/30

(54) **Method and computer system for reducing the possibility of cold reset**
Verfahren und Computersystem zur Reduzierung der Kaltresetwahrscheinlichkeit
Procédé et système informatique permettant d'atténuer les risques de réinitialisation à froid

(43) Date of publication of application: 17.08.2005
(73) Proprietor: High Tech Computer Corp., Taoyuan (TW)
(72) Inventor: Chen, Jen-De, Taoyuan City Taoyuan County 330 (TW); Kuo, Ying-Chieh, Taoyuan City Taoyuan County 330 (TW)
(74) Representative: Weber, Joachim

(56) References cited:
- EP-A- 0 404 061
- SIEMENS AG: "C55" INTERNET ARTICLE, [Online] 2002, XP002301493 MUNICH Retrieved from the Internet: <URL:http://www.siemens-mobile.com/reposit ory/169/16970/c55_userguide_3_comaucacnhki emanzsgza_eng.pdf> [retrieved on 2004-10-18]
- ANONYMOUS: "Siemens C55" INTERNET ARTICLE, [Online] XP002301494 Retrieved from the Internet: <URL:http://www.expansys.com/product.asp?c ode=C55AQUA> [retrieved on 2004-10-19]
- DATABASE WPI Section EI, Week 200426 Derwent Publications Ltd., London, GB; Class T01, AN 2004-279078 XP002301553 & KR 2003 095 743 A (LG ELECTRONICS INC), 20 March 1224 (1224-03-20)

## Description

### BACKGROUND OF THE INVENTION

### Field of the Invention

The invention relates in general to a method and computer system for reducing the possibility of cold reset, and more particularly to a method and computer system that can prevent the lost of data stored in the synchronous dynamic random access memory (SDRAM) caused by battery faults so as to reduce the possibility of cold reset.

### Description of the Related Art

For a computer system that relies on a battery as its main source of power supply, the computer system has to enter the sleep mode in order to reduce power consumption when a battery fault occurs. The battery fault means that when the battery is in low power or when the battery is detached from the computer system when the computer system experiences external impact and therefore the battery could not supply power anymore. Example for the referred computer system could be a personal digital assistant (PDA).

Generally speaking, the central processing unit (CPU) used in a computer system has two modes: the normal operation mode and the sleep mode. If the CPU has the ability to handle battery fault, the CPU enter sleep mode directly when a battery fault occurs. But if the CPU supports the function of software battery fault handling, the CPU receives a battery fault indication event when a battery fault occurs. At this time, the battery fault indication event is regarded as an interrupt source. The interrupt source needs to be processed by software code before the CPU can enter the sleep mode.

After the CPU has entered the sleep mode when a battery fault had occurred, the remaining power, which includes the power stored in the equivalent capacitors and the power from a backup power supply, in the main circuit board of the computer system can carry on supplying power to the SDRAM in order to retain the data stored in the SDRAM. When a new battery or the detached battery is reinstalled properly by the user, the CPU can again be awakened and the status of the computer system can be restored back to what it was before the sleep mode, so that the user can continue to use the computer system. After the CPU is awakened, it has to execute hardware initialization before it can run application programs. During the hardware initialization, software codes, which include boot code, are loaded.

However, if the CPU supports the function of software battery fault handling, the software code can handle the battery fault indication event, which can tell the CPU to enter the sleep mode, only after the hardware initialization is successfully completed by the CPU. If the battery fault occurs during the hardware initialization, the software code cannot handle the battery fault indication event, and therefore CPU can not enter the sleep mode. Consequently, the CPU has to stay in the normal operation mode, which consumes a great amount of power. Because no power supplied from the battery, the remaining power will be used up quickly. At this time, the data stored in the SDRAM will be lost completely because the main circuit board fails to supply power to the SDRAM. Data of the user and downloaded programs will be all erased. After the user has replaced the battery or has reinstalled the battery, the computer system can only proceed with cold reset that brings the system back to its default factory status because all the previous data in the SDRAM is lost.

For the sake of explanation, the period during which the CPU is executing hardware initialization is defined as the first period T1, and the period that the CPU can start running application programs is defined as the second period T2.

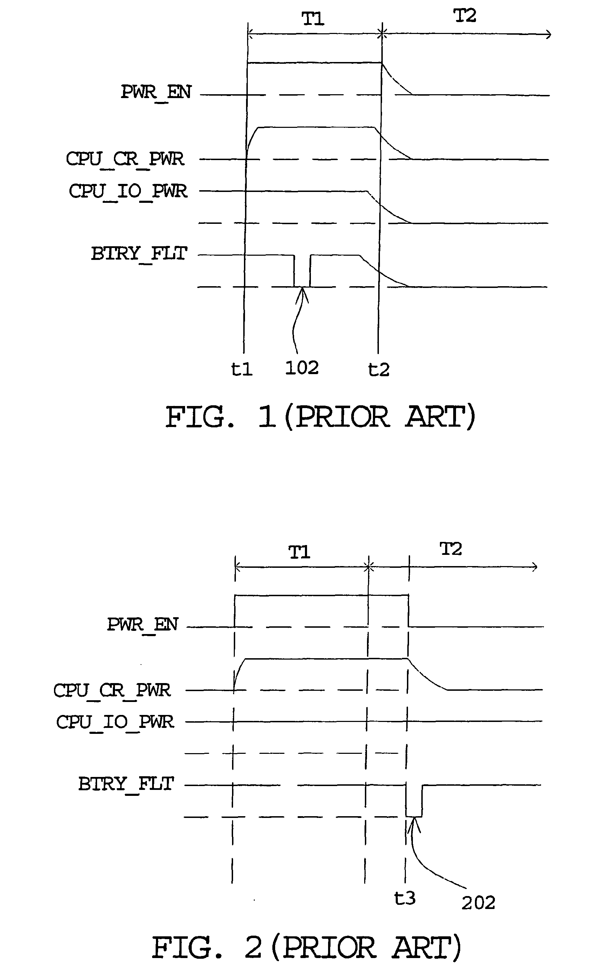

Referring to FIG. 1, the timing diagram of the signals when a battery fault occurs during the first period T1 is shown. The power enable signal PWR_EN indicates whether the sleep mode is activated. When the power enable signal PWR_EN is enabled, for example with high voltage, the CPU is in the normal operation mode; whereas the CPU is in the sleep mode when the power enable signal PWR_EN is disabled. The CPU core power signal CPU_CR_PWR indicates the status of power supply for the core power of the CPU. When the CPU is in normal operation mode, the battery supplies power to the CPU normally, and therefore the CPU core power signal CPU_CR_PWR is in high voltage. When the CPU is in sleep mode, the battery stops supplying power to the CPU, and therefore the CPU core power signal CPU_CR_PWR is in low voltage.

Furthermore, the CPU peripheral component power CPU_IO_PWR indicates the status of power supply for the CPU's peripheral components. No matter whether the CPU is in the normal operation mode or in the sleep mode, power is always supplied to the CPU's peripheral components, and therefore the CPU peripheral component power CPU_IO_PWR is always in high voltage. The battery fault signal BTRY_FLT indicates whether any battery faults occur. When the battery fault signal BTRY_FLT is enabled, it is changed to low voltage.

As shown in FIG. 1, the CPU is awakened from the sleep mode at the point t1, then the battery enable signal PWR_EN is changed to high voltage and the CPU enters the first period T1. If any battery fault occurs in the first period T1, a battery fault indication event 102 is generated and the battery fault signal BRTY_FLT is changed to low voltage. At this moment, the software code cannot handle the battery fault, and therefore the CPU keeps working in the normal operation mode in which great amount of power is consumed continuously. At point t2, because all the power in the main circuit board is used up, the main circuit board no longer supplies power to the SDRAM. Data stored in the SDRAM is therefore lost completely.

Refer to FIG. 2, the timing diagram of the signals when a battery fault occurs during the second period T2 is shown. When a battery fault occurs at the time point t3 in the second period T2, a battery fault indication event 202 is generated, the software code can successfully handle the battery fault indication event 202, and therefore the CPU can successfully enter the sleep mode in order to reduce power consumption. At this moment, the remaining power in the main circuit board can continue supplying power to the SDRAM so the data stored in the SDRAM can be safely preserved.

Therefore, the question of how to handle the battery fault, which happens in the first period, causing the remaining power in the main circuit board to be used up because the CPU is still in the normal operation mode and subsequently loses the data stored in the SDRAM because the main circuit board can no longer supply power to the SDRAM, is one of the research direction of the industry in order to reduce the possibility of cold reset.

EP-A-0 404 061 discloses a method for preventing the resume function in a battery operated device when the power remaining in the battery is insufficient to power the device. This method reduces the possibility of cold reset in a computer system that includes a central processing unit CPU, a wake-up button that is used to waken the CPU from a sleep mode and a battery that supplies power to the computer system, the CPU supporting the function of the software battery fault handling and foresees that when the CPU is in the sleep mode and the computer system's power supply is in an uncertain status, the CPU staying in the sleep mode even if a wake-up event occurs.

Siemens AG: "C55" [Online] 2002, XP002301493 MUNICH, retrieved from the Internet: URL:http://www.siemens-mobil.com/repository/169/16970/c55_userguide _3_comaucacnhkiemanzsgza_eng.pdf, discloses a computer system comprising a wake-up button, a CPU that is used to control the computer system and supporting the function of software battery fault handling and a delay protection circuit that is used to detect the status of the wake-up button wherein when the computer system is in the sleep mode and the delay protection circuit has detected that the period during which the wake-up button is pressed is less than a predetermined value, then the CPU continues to stay in the sleep mode.

### SUMMARY OF THE INVENTION

The invention is defined by the features of the independent claims. The respective sub-claims contain further preferred developments of the invention. The method of the invention includes the procedures (1) When the CPU is in the sleep mode and the computer system's power supply is in an uncertain status, the CPU staying in the sleep mode even a wake-up event occurs. (2) When the CPU is in the sleep mode and the period during which the wake-up button is pressed is less than a predetermined value, the CPU continues to stay in the sleep mode.

Other objects, features, and advantages of the invention will become apparent from the following detailed description of the preferred but non-limiting embodiments. The following description is made with reference to the accompanying drawings.

### BRIEF DESCRIPTION OF THE DRAWINGS

FIG. 1 shows the timing diagram of the signals when a battery fault occurs during the first period T1.

FIG. 2 shows the timing diagram of the signals when a battery fault occurs during the second period T2.

FIG. 3 shows a block diagram of a computer system for the above-identified procedure (1) of the method provided in a preferred embodiment of the invention.

FIG. 4A shows the timing diagram of the first signal S1 and the second signal S2when the CPU of FIG. 3 is in the sleep mode and the detection circuit 306 has determined that the computer system is in a status of uncertain power supply.

FIG. 4B shows the timing diagram of the first signal S1 and the second signal S2when the CPU of FIG. 3 is in the sleep mode and the detection circuit has determined that the computer system is not in a status of uncertain power supply.

FIG. 5 is a block diagram of a computer system for the above-identified procedure (2) of the method provided in a preferred embodiment of the invention.

FIG. 6A shown the timing diagram of the third signal S3 and the forth signal S4when the CPU in FIG. 5 is in the sleep mode and the period during which the wake-up button is pressed is less than the P value.

FIG. 6B shows the timing diagram of the third signal S3 and the forth signal S4when the CPU in FIG. 5 is in the sleep mode and the period during which the wake-up button is pressed is greater than the P value.

### DETAILED DESCRIPTION OF THE INVENTION

The invention solves the problem of losing data stored in the SDRAM by preventing the occurrence of battery faults in the first period T1. The procedures provided by the method of the invention to prevent the occurrence of battery faults in the first period T1 include: (1) When the computer is in sleep mode and the computer system's power supply is in an uncertain status, wake-up events, if any of them occur, are not send to the CPU and therefore the CPU can stay in the sleep mode. (2) When the computer system is in the sleep mode, it determines whether the wake-up button is pressed accidentally by external impact according to the period during which the wake-up button is pressed. If the period during which the wake-up button is pressed is less than a predetermined value, the CPU continues to stay in the sleep mode. Procedure (1) and procedure (2) can be implemented together or implemented individually.

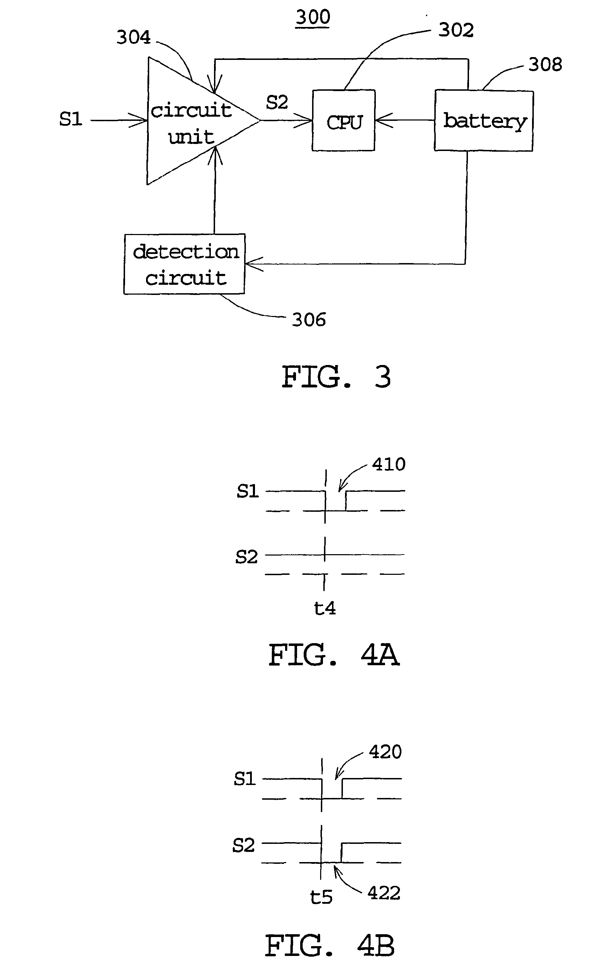

Please refer to FIG. 3, it is a block diagram of a computer system 300 for a preferred embodiment of the procedure (1) mentioned above. The computer system 300 includes a central processing unit (CPU) 302, a circuit unit 304, a detection circuit 306, and a battery 308. The CPU 302 is used to control the computer system 300, and it supports the function of software battery fault handling. The circuit unit 304 is electrically connected to the CPU 302. The circuit unit 304 is used to receive a first signal S1 and output a second signal S2. The detection circuit 306 controls the circuit unit 304 according to the status of the computer system 300. And the battery 308 supplies power to the computer system 300.

Please refer to FIG. 4A, it is the first signal S1's and the second signal S2's timing diagram showing that the CPU 302 of FIG. 3 is in the sleep mode and the detection circuit 306 has determined that the computer system 300 is in a status of uncertain power supply. Assume that when the first signal S1 is enabled, the first signal S1 is in low voltage, and similarly for the second signal S2. When a wake-up event 410 occurs at the time point t4, the first signal S1 is changed to low voltage. When the CPU 302 is in the sleep mode and the detection circuit 306 has detected that the computer system 300 is in a status of uncertain power supply, the circuit unit 304 does not pass the wake-up event 410 to the CPU 302, and therefore the second signal S2 stays in high voltage. Even the wake-up event 410 has already been inputted into the circuit unit 304, because the CPU 302 does not receive the wake-up event, the CPU 302 remains in the sleep mode.

Refer to FIG. 4B, the timing diagram of the first signal S1 and the second signal S2 is shown when the CPU 302 of FIG. 3 is in the sleep mode and the detection circuit 306 has determined that the computer system 300 is not in a status of uncertain power supply. When a wake-up event 420 occurs at the time point t5, the first signal S1 is changed to low voltage. When the CPU 302 is in the sleep mode, and the detection circuit 306 has determined that the computer system 300 is not in a status of uncertain power supply, then the circuit unit 304 passes the wake-up event 422 to the CPU 302. The CPU 302 is awakened.

When the computer system is in a status of uncertain power supply, the invention prevents the situation, in which the CPU 302 is awakened and subsequently enters the first period during which the hardware initialisation occurs, by not allowing the wake-up event to reach the CPU 302. This is because (I) if the computer system 300 is in (i) the battery fault status, in which the battery could not normally supply power, due to the reasons of the battery being flat or the battery being detached; or (ii) the status when the user opens the battery lid, which is used to immobilize the battery, in order to replace the battery; or (iii) the low power status when the battery's power level is too low, and (II) if the computer system 300 is awakened so that it starts the normal operation mode and enters the first period T1, during which hardware initialisation is carried out, then the battery is unable to supply power and subsequently the remaining power in the main circuit board is used up quickly causing the loss of data stored in the SDRAM. The invention allows the CPU 302 to stay in the sleep mode when the computer system is in any of the three statuses mentioned above by detecting the status of the computer system 300. Therefore, the CPU 302 will not enter the first period T1, and the problem, which is caused by the software code being unable to handle battery fault events in the traditional method, can be prevented. The remaining power in the main circuit board can continue to supply power to the SDRAM in order to preserve the data stored in the SDRAM. Therefore, the computer system 300 provided by the invention can prevent the loss of data in the SDRAM and can also reduce the possibility of cold reset.

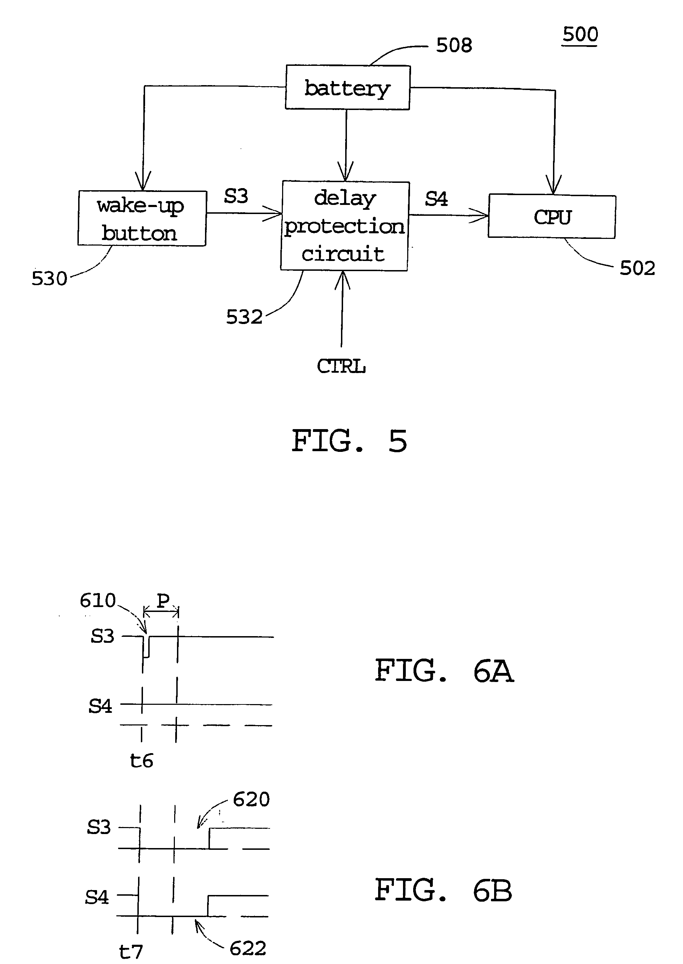

Refer to FIG. 5, a block diagram of a computer system 500 that follows the procedure (2) mentioned above for a preferred embodiment of the invention is shown. The computer system 500 includes a wake-up button 530, a CPU 502, a delay protection circuit 532, and a battery 508. The wake-up button 530 is located on the external case of the computer system 500 for user's operation of the computer system. The CPU 502 is used to control the computer system 500, and it supports the function of software battery fault handling. The wake-up button 530 is applied for outputting a third signal S3 to the delay protection circuit 532, and the delay protection circuit 532 is applied for outputting a fourth signal S4 to the CPU 502. The battery 508 supplies the power required by the computer system 500.

The wake-up button 530 can be pressed by a user's finger or by the impact when the computer system 500 falls to the ground. When the computer system 500 falls, it is possible that the battery is detached by the impact. Generally speaking, the period during which the wake-up button 530 is pressed due to a collision or an impact is about 1∼2 millisecond, whereas the period during which the wake-up button is pressed by the user's finger is usually about 100 millisecond. Therefore, a predetermined value P, which has a default value of greater than 1∼2 millisecond and less than 100 millisecond, is proposed in the invention, so that whether the wake-up button 530 is pressed intentionally or accidentally can be determined by checking the period during which the wake-up button 530 is pressed being less or larger than the value of P.

When the computer system 500 falls to the ground, the battery 508 may be detached. If the battery 508 is detached, the battery 508 cannot supply power to the computer system 500. At this moment, if the CPU 502 is awakened from the sleep mode, then the remaining power in the main circuit board will be used up quickly causing the lost of data stored in the SDRAM. Therefore, when the CPU 502 is in the sleep mode and the delay protection circuit 532 has detected that the period during which the wake-up button 530 is pressed is less than the P value, it means that the computer system may have experienced a collision or an impact and the battery 508 may already have been detached. At this moment, the invention allows the CPU 502 to stay in the sleep mode to prevent the loss of data in the SDRAM.

Referring to FIG. 6A, timing diagram of the third signal S3 and the forth signal S4 is shown when the CPU 502 is in the sleep mode and the period during which the wake-up button is pressed is less than the P value. Assume that when the third signal S3 is enabled, it is in low voltage, and similarly for the forth signal S4. When a wake-up event 610 occurs at the time point t6, the third signal S3 is changed to low voltage. When the CPU 502 is in the sleep mode, and the delay protection circuit 532 has detected that the period during which the wake-up button 530 is pressed is less than the P value, the delay protection circuit 532, even it has received the wake-up event 610, does not send any wake-up event to the CPU 502. Therefore, the forth signal S4 outputted by the delay protection circuit 532 at the time point t6 still stays in high voltage, and the CPU still stays in the sleep mode.

Please refer to FIG. 6B, timing diagram of the third signal S3 and the forth signal S4 is shown when the CPU 502 of FIG. 5 is in the sleep mode and the period during which the wake-up button is pressed is greater than the P value. When a wake-up event 620 occurs at the time point t7, the third signal S3 is changed to low voltage. When the CPU 502 is in the sleep mode, and the delay protection circuit 532 has detected that the period during which the wake-up button 530 is pressed is greater than the P value, it means that the user has pressed the wake-up button 530 and wants to awaken the computer system 500. Therefore, when the delay protection circuit 532 receives the wake-up event 620, the delay protection circuit 532 outputs a wake-up event 622 to the CPU 502. At this time, the fourth signal S4 outputted by the delay protection circuit 532 is changed to low voltage at the time point t7, thus the CPU 502 is awakened.

The delay protection circuit 532 is controlled by a control signal CTRL. When the computer system 500 is in the sleep mode, the control signal CTRL is enabled and the delay protection circuit 532 is also enabled in order to execute the processes shown in FIG. 6A and FIG. 6B. But when the computer system 500 is in normal operation mode, the control signal CTRL is disabled and the delay protection circuit 532 is disabled. At this time, the third signal S3 can be directly pass to the CPU 502, and thereby the operational speed of the computer system 500 in the normal operation mode is increased.

The method and computer system for reducing the possibility of cold reset provided by the invention can effectively prevent battery faults, which causes the problem of losing data in the SDRAM, from happening during the first period T1. The invention provides the advantage of improved data completeness and increased length of time during which data can be stored in the SDRAM for computer systems especially for PDAs.

While the invention has been described by way of example and in terms of a preferred embodiment, it is to be understood that the invention is not limited thereto. On the contrary, it is intended to cover various modifications and similar arrangements and procedures, and the scope of the appended claims therefore should be accorded the broadest interpretation so as to encompass all such modifications and similar arrangements and procedures.

## Claims

1. A method for reducing the possibility of cold reset in a computer system that includes a central processing unit -CPU-, the CPU supporting the function of software battery fault handling, a battery that supplies power to the computer system, a wake-up button that is used to awaken the CPU from a sleep mode, and a delay protection circuit that is used to detect the status of the wake-up button, the method comprising:
- when the CPU is in the sleep mode and the delay protection circuit has detected that the period during which the wake-up button is pressed is less than a predetermined value, then the CPU continues to stay in the sleep mode,
- wherein the predetermined value is a value greater than 1 millisecond and less than 100 milliseconds.

2. The method according to claim 1, further comprising:
when the CPU is in the sleep mode and the computer system's power supply is in an uncertain power supply status in which the power supply is instable, the CPU remains in the sleep mode while a wake-up event occurs.

3. The method according to claim 2, wherein the uncertain power supply status is the status of when the battery could not normally supply power or the battery being detached.

4. The method according to claim 2, wherein the uncertain power supply status is the status when the battery lid is opened.

5. The method according to claim 2, wherein the uncertain power supply status is the status when the battery is in low power.

6. The method according to claim 1, wherein the computer system is a personal digital assistant -PDA-.

7. The method according to claim 1, wherein when the computer system is in the sleep mode, the delay protection circuit is enabled; when the computer system is in normal operation mode, the delay protection circuit is disabled.

8. A computer system comprising:
- a CPU that is used to control the computer system and the CPU supports the function of software battery fault handling;
- -a battery that supplies power to the computer system;
- a wake-up button that is used to awaken the CPU from a sleep mode; and
- a delay protection circuit that is used to detect the status of the wake-up button;
- wherein when the CPU is in the sleep mode and the delay protection circuit has detected that the period during which the wake-up button is pressed is less than a predetermined value, then the CPU continues to stay in the sleep mode; and
- wherein the predetermined value is a value greater than 1 millisecond and less than 100 milliseconds.

9. The computer system according to claim 8 further comprising:
- a circuit unit that is electrically connected to the CPU, and is used to receive a wake-up event and to selectively output the wake-up event to the CPU;
- a detection circuit that is used to control the circuit unit according to the status of the computer system; and
- wherein when the CPU is in the sleep mode and the detection circuit has detected that the computer system is in a uncertain power supply status in which the power supply is instable, the CPU remains in the sleep mode even though the wake-up event has been sent to the circuit unit.

10. The computer system according to claim 9, wherein the uncertain power supply status is the status of when the battery could not normally supply power or the battery being detached.

11. The computer system according to claim 9, wherein the uncertain power supply status is the status when the battery lid is opened.

12. The computer system according to claim 9, wherein the uncertain power supply status is the status when the battery is in low power.

13. The computer system according to claim 8, wherein the computer is a personal digital assistant -PDA-.

14. The computer system according to claim 8, wherein when the computer system is in the sleep mode, the delay protection circuit is enabled; when the computer system is in normal operation mode, the delay protection circuit is disabled.

## Patentansprüche

1. Verfahren zur Reduzierung der Kaltresetwahrscheinlichkeit in einem Computersystem mit einer zentrale Recheneinheit - CPU **-,** wobei die CPU die Funktion einer Software zur Batteriefehlerhandhabung unterstützt, einer Batterie, die Strom zum Computersystem zuführt, einem Aufweckknopf, der verwendet wird, um die CPU aus dem Schlafmodus aufzuwecken, und einer Verzögerungsschutzschaltung, die verwendet wird, um den Status des Aufweckknopfes zu erfassen, wobei das Verfahren umfasst:
- wenn die CPU sich im Schlafmodus befindet und die Verzögerungsschutzschaltung erfasst hat, dass der Zeitraum, während dessen der Aufweckknopf gedrückt wird, geringer als ein vorbestimmter Wert ist, dann verbleibt die CPU weiterhin im Schlafmodus,
- wobei der vorbestimmte Wert ein Wert größer als 1 Millisekunde und kleiner als 100 Millisekunden ist.

2. Verfahren nach Anspruch 1, ferner umfassend:
wenn die CPU sich im Schlafmodus befindet und die Stromversorgung des Computersystems sich in einem unsicheren Stromversorgungszustand befindet, in dem die Stromversorgung instabil ist, dann verbleibt die CPU im Schlafmodus, während ein Aufwachereignis auftritt.

3. Verfahren nach Anspruch 2, wobei der unsichere Stromversorgungszustand der Zustand ist, wenn die Batterie Strom nicht normal zuführen kann oder die Batterie entfernt ist.

4. Verfahren nach Anspruch 2, wobei der unsichere Stromversorgungszustand der Zustand ist, wenn der Batteriedeckel geöffnet ist.

5. Verfahren nach Anspruch 2, wobei der unsichere Stromversorgungszustand der Zustand ist, wenn die Batterie schwach ist.

6. Verfahren nach Anspruch 1, wobei das Computersystem ein Organizer - PDA - ist.

7. Verfahren nach Anspruch 1, wobei die Verzögerungsschutzschaltung aktiviert ist, wenn das Computersystem im Schlafmodus ist, und die Verzögerungsschutzschaltung deaktiviert ist, wenn sich das Computersystem im normalen Betriebsmodus befindet.

8. Computersystem, umfassend:
- eine CPU, die verwendet wird, um das Computersystem zu steuern, und die CPU unterstützt die Funktion einer Software zur Batteriefehlerhandhabung,
- eine Batterie, die Strom zum Computersystem zuführt,
- einen Aufweckknopf, der verwendet wird, um die CPU aus dem Schlafmodus aufzuwecken;
- und eine Verzögerungsschutzschaltung, die verwendet wird, um den Status des Aufweckknopfes zu erfassen,
- wobei die CPU weiterhin im Schlafmodus verbleibt, wenn die CPU sich im Schlafmodus befindet und die Verzögerungsschutzschaltung erfasst hat, dass der Zeitraum, während dessen der Aufweckknopf gedrückt wird, geringer als ein vorbestimmter Wert ist; und
- wobei der vorbestimmte Wert ein Wert größer als 1 Millisekunde und kleiner als 100 Millisekunden ist.

9. Computersystem nach Anspruch 8, ferner umfassend:
- eine Schaltungseinheit, die elektrisch mit der CPU verbunden ist, und verwendet wird, um ein Aufweckereignis zu empfangen und das Aufweckereignis wahlweise zur CPU auszugeben;
- eine Erfassungsschaltung, die verwendet wird, um die Schaltungseinheit gemäß dem Zustand des Computersystems zu steuern; und
- wobei, wenn die CPU sich im Schlafmodus befindet und die Erfassungsschaltung erfasst hat, dass sich das Computersystems in einem unsicheren Stromversorgungszustand befindet, in dem die Stromversorgung instabil ist, die CPU im Schlafmodus verbleibt, auch wenn ein Aufwachereignis an die Schaltungseinheit gesandt wurde.

10. Computersystem nach Anspruch 9, wobei der unsichere Stromversorgungszustand der Zustand ist, wenn die Batterie Strom nicht normal zuführen kann oder die Batterie entfernt ist.

11. Verfahren nach Anspruch 9, wobei der unsichere Stromversorgungszustand der Zustand ist, wenn der Batteriedeckel geöffnet ist.

12. Verfahren nach Anspruch 9, wobei der unsichere Stromversorgungszustand der Zustand ist, wenn die Batterie schwach ist.

13. Computersystem nach Anspruch 8, wobei das Computersystem ein Organizer - PDA - ist.

14. Computersystem nach Anspruch 8, wobei die Verzögerungsschutzschaltung aktiviert ist, wenn das Computersystem im Schlafmodus ist, und die Verzögerungsschutzschaltung deaktiviert ist, wenn sich das Computersystem im normalen Betriebsmodus befindet.

## Revendications

1. Procédé permettant d'atténuer les risques de réinitialisation à froid dans un système informatique qui comprend une unité centrale - UC -, l'UC prenant en charge la fonction de gestion de défaillance de batterie logicielle, une batterie qui alimente le système informatique, un bouton de réveil qui est utilisé pour réveiller l'UC d'un mode veille, et un circuit de protection de retard qui est utilisé pour détecter le statut du bouton de réveil, le procédé comprenant :
- lorsque l'UC est en mode veille et que le circuit de protection de retard a détecté que la période pendant laquelle le bouton de réveil est enfoncé est inférieure à une valeur prédéterminée, l'UC continue à rester en mode veille,
- où la valeur prédéterminée est une valeur supérieure à 1 milliseconde et inférieure à 100 millisecondes.

2. Procédé selon la revendication 1, comprenant en outre :
lorsque l'UC est en mode veille et que l'alimentation du système informatique est dans un statut d'alimentation incertain dans lequel l'alimentation est instable, l'UC reste en mode veille alors qu'un événement de réveil se produit.

3. Procédé selon la revendication 2, dans lequel le statut d'alimentation incertain est le statut dans lequel la batterie peut ne pas alimenter normalement ou la batterie est détachée.

4. Procédé selon la revendication 2, dans lequel le statut d'alimentation incertain est le statut dans lequel le couvercle de batterie est ouvert.

5. Procédé selon la revendication 2, dans lequel le statut d'alimentation incertain est le statut dans lequel le niveau de la batterie est faible.

6. Procédé selon la revendication 1, dans lequel le système informatique est un assistant numérique personnel - PDA -.

7. Procédé selon la revendication 1, dans lequel, lorsque le système informatique est en mode veille, le circuit de protection de retard est activé ; lorsque le système informatique est en mode de fonctionnement normal, le circuit de protection de retard est désactivé.

8. Système informatique comprenant :
- une UC qui est utilisée pour commander le système informatique et l'UC prend en charge la fonction de gestion de défaillance de batterie logicielle ;
- une batterie qui alimente le système informatique ;
- un bouton de réveil qui est utilisé pour réveiller l'UC d'un mode veille ; et
- un circuit de protection de retard qui est utilisé pour détecter le statut du bouton de réveil ;
- où, lorsque l'UC est en mode veille et que le circuit de protection de retard a détecté que la période pendant laquelle le bouton de réveil est enfoncé est inférieure à une valeur prédéterminée, l'UC continue à rester en mode veille, et
- où la valeur prédéterminée est une valeur supérieure à 1 milliseconde et inférieure à 100 millisecondes.

9. Système informatique selon la revendication 8, comprenant en outre :
- une unité de circuit qui est électriquement connectée à l'UC, et est utilisée pour recevoir un événement de réveil et pour sortir sélectivement l'environnement de réveil vers l'UC ;
- un circuit de détection qui est utilisé pour commander l'unité de circuit selon le statut du système informatique ; et
- où, lorsque l'UC est en mode veille et que le circuit de détection a détecté que le système informatique est dans un statut d'alimentation incertain dans lequel l'alimentation est instable, l'UC reste en mode veille même si l'événement de réveil a été envoyé à l'unité de circuit.

10. Système informatique selon la revendication 9, dans lequel le statut d'alimentation incertain est le statut dans lequel la batterie ne peut pas alimenter normalement ou la batterie est détachée.

11. Système informatique selon la revendication 9, dans lequel le statut d'alimentation incertain est le statut dans lequel le couvercle de batterie est ouvert.

12. Système informatique selon la revendication 9, dans lequel le statut d'alimentation incertain est le statut dans lequel le niveau de la batterie est faible.

13. Système informatique selon la revendication 8, dans lequel l'ordinateur est un assistant numérique personnel - PDA -.

14. Système informatique selon la revendication 8, dans lequel, lorsque le système informatique est en mode veille, le circuit de protection de retard est activé ; lorsque le système informatique est en mode de fonctionnement normal, le circuit de protection de retard est désactivé.
